# EUROPEAN PATENT APPLICATION

(11) **EP 0 967 104 A2**
(43) Date of publication of application: **29.12.1999**
(21) Application number: 99201818.4
(22) Date of filing: 08.06.1999
(51) Int. Cl.: B60K 11/04

(54) **Apparatus with directable blades for conveying air to radiators of motor vehicles and the like**

(30) Priority: 17.06.1998 IT MI981389; 17.07.1998 IT MI981655
(71) Applicant: Baruffaldi S.p.A., 20097 San Donato Milanese, Milan (IT)
(72) Inventor: Boffelli, Piercarlo, Milano (IT); Depoli, Erminio, Crema (CR) (IT); Natale, Fabio, San Donato Milanese (MI) (IT)
(74) Representative: Raimondi, Alfredo, Dott. Ing. Prof.

(57) **Abstract**

Apparatus for conveying air to radiators of vehicles and the like, comprising a central body (11) mounted on a rotating support (21;121;221;321;421) and a plurality of blades (12) radially mounted by means of associated engaging elements (31;131;231;331;431) on said central body (11), in which said blades (12) are rotatable about their respective longitudinal axis upon actuation of associated drive means (42,43,43a;142,143,143a) and transmission means (41a,31a; 141a,31a; 241a,231a,230; 341a,330; 441a,431a) for the movement.

## Description

The present invention relates to an apparatus which comprises a fan with directable blades for conveying air to radiators of motor vehicles and the like and is able to perform adjustment of the quantity of air conveyed onto the heat exchanger containing the cooling liquid so as to keep the engine at the most suitable temperature in all operating conditions thereof.

In the technical sector relating to the treatment of cooling liquids contained in the radiators of motor vehicles or the like it is known that there is the need to force a flow of air onto the radiator itself in order to obtain a more rapid dissipation of heat from the liquid to the exterior, said forced air flow being obtained by causing rotation of an apparatus which is normally mounted either directly on the driving shaft or on the shaft of the water pump or on a driven shaft carrying a pulley which receives movement from a belt actuated by the driving shaft itself.

It is also known that said apparatus must be operated only when a certain predefined temperature of the water is reached, said temperature being detected by means of a thermostat which actuates suitable engaging devices - such as, for example, an electromagnetic clutch, closing of which causes the rotational movement of the fan - which are designed to cause rotation of the fan itself at varying speeds so as to regulate the flowrate of the cooling air forced onto the radiator in accordance with the real needs arising from the conditions which produce the increase in temperature.

An example of such adjustments to the speed of rotation of the fan is illustrated in IT-MI97A 1447 in the name of the same present Applicants.

Although performing their function, said apparatus do not allow continuous adjustment of the quantity of air forced onto the heat exchanger which cools the liquid, thus limiting the potential performance of the device.

The technical problem which is posed, therefore, is that of providing a ventilation apparatus for conveying the air cooling the cooling liquid in motor vehicles or the like, which allows the flowrate of the air forced onto the heat exchanger containing the cooling liquid to be continuously adjusted, without the need for variation in the speed of rotation of the fan which is able to run at a constant speed which is substantially the same as, or proportional to, the speed of rotation of the actuating shaft connected to the driving shaft, without the need for devices controlling the speed itself.

Within the scope of this problem a further requirement is that the quantity of air forced onto the heat exchanger should be controlled by means of the direct detection of the temperature of the cooling liquid depending on the different or particular external climatic conditions due to the very high or very low temperatures of the environment itself.

These technical problems are solved according to the present invention by an apparatus for conveying air to radiators of vehicles and the like, comprising a central body mounted on a rotating support and a plurality of blades radially mounted by means of associated engaging elements on said central body, in which said blades are rotatable about their respective longitudinal axis upon actuation of associated drive means and transmission means for the movement, forming part of the apparatus itself.

Further details may be obtained from the following description of a non-limiting example of embodiment of the invention provided with reference to the accompanying drawings in which:
- Figure 1a shows a cross-section transverse to the axis of the apparatus according to the present invention with a device for orientation of the blades of the multiple rack type and associated drive system outside the fan support;
- Figure 1b shows a cross-section along the plane indicated by Ib-Ib in Fig. 1a;
- Figure 1c shows a simplified diagram of the device for performing rotation of the blades, corresponding to Fig. 1b;
- Figure 2a shows a schematic cross-section transverse to the axis of the fan apparatus according to the present invention with a rack-type device for orientation of the blades, in the minimum air flow position;
- Figure 2b shows a cross-section along the plane indicated by IIb-IIb in Fig. 2a;
- Figure 2c shows a simplified diagram of the device for actuating rotation of the blades, corresponding to Fig. 2b;
- Figure 3 shows a cross-sectional view, similar to that of Fig. 2b, of the apparatus according to the invention with a device for actuation of the blades and associated drive system inside the fan support;
- Figure 4 shows a cross-sectional view, similar to that of Fig. 3, of a different actuation drive system inside the apparatus support;
- Figure 5a shows a cross-sectional view, similar to that of Fig. 1a, of the apparatus according to the invention with a device for actuation of the blades of the centralized rack type and associated drive system outside the apparatus support;
- Figure 5b shows a cross-section along the plane Vb-Vb of Fig. 5a;
- Figure 6 shows an axial cross-section through the apparatus of the centralized rack type with a device for actuation of the blades and associated drive system inside the fan support;
- Figure 7 shows a cross-sectional view, similar to that of Fig. 6, with a different realization of the drive system for actuation of the blades inside the driving shaft;
- Figure 8a shows a cross-sectional view, similar to that of Fig. 1a, of a further embodiment of the apparatus according to the invention with a device for moving the blades of the bevel wheel type and associated drive system outside the fan support;
- Figure 8b shows a cross-section along the plane indicated by VIIIb-VIIIb in Fig. 8a with the blades in the maximum flow position;
- Figure 8c shows a cross-section along the plane indicated by VIIIb-VIIIb in Fig. 8a with the blades in the minimum flow position;
- Figure 9 shows a cross-section, similar to that of Fig. 8b, with a device for actuation of the blades and associated drive system which are located inside the shaft supporting the fan;
- Figure 10a shows a cross-sectional view, along an axial vertical plane, of a further embodiment of the apparatus with a device for actuation of the blades of the lever type and drive system outside the fan support with the blades in the maximum flow position;
- Figure 10b shows a schematic view of the blade actuating lever according to Fig. 10a;
- Figure 10c shows a cross-section, similar to that of Fig. 10a, with the blades in the minimum flow position;
- Figure 10d is a schematic view of the blade actuating lever according to Fig. 10c;
- Figure 11 shows a cross-section, similar to that of Fig. 10a, with a device for actuation of the blades and associated drive system which are located inside the fan support;
- Figure 12 shows a further variation of an embodiment of the apparatus according to the invention;
- Figures 13a to 13d show a detail of the different positions of the means for actuation of blades; and
- Figure 14 shows an example of a variation of the devices for controlling the position of the blade during rotation about its longitudinal axis and the means for irreversibility of rotation itself.

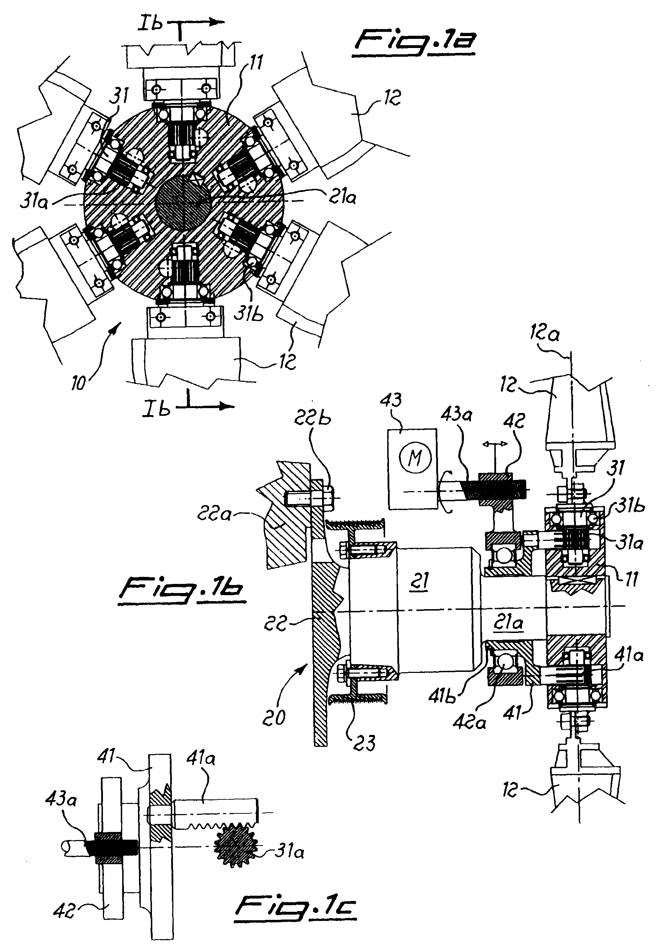

As shown in Figs. 1a, 1b, the apparatus 10 for cooling the cooling liquid in motor vehicles and the like according to the invention is mounted on a device 20 for supporting and transmitting the movement, comprising a support 21 rotating with respect to a fixture 22 joined to the body 22a of the engine by means of bolts 22b or the like and extending in the longitudinal direction with a shaft 21a on which the apparatus 10 is mounted. The support 21, and hence the apparatus 10, are kept constantly rotating by means of a pulley 23 which is joined to the support itself and connected in a known manner to a shaft of the vehicle engine.

The apparatus 10 essentially consists of a central body 11 on which the blades 12 are radially mounted, said blades causing the flow of the air from the outside towards the radiator (not shown) containing the cooling liquid.

In the example of embodiment according to Fig. 1a, the end of each blade 12 situated inside the central body 11 consists of a pivot pin 31 which has a cylindrical toothing 31a and is radially mounted by means of bearings 31b on the body 11. In this way each blade 12, in addition to rotating with the fan 10 on the support 21a, is also able to rotate about its own longitudinal axis 12a as will emerge more clearly below.

Each gearing 31a is in fact coupled to an actuating device consisting of an associated rectilinear rack 41a which is integral with a tube 41 mounted on the shaft 21a with which it therefore rotates integrally.

The tube 41 is also connected, by means of a bearing 42a, to a disk 42 which may be translated parallel to the shaft 21a by means of a screw 43a operated by a motor 43 arranged outside the support 21.

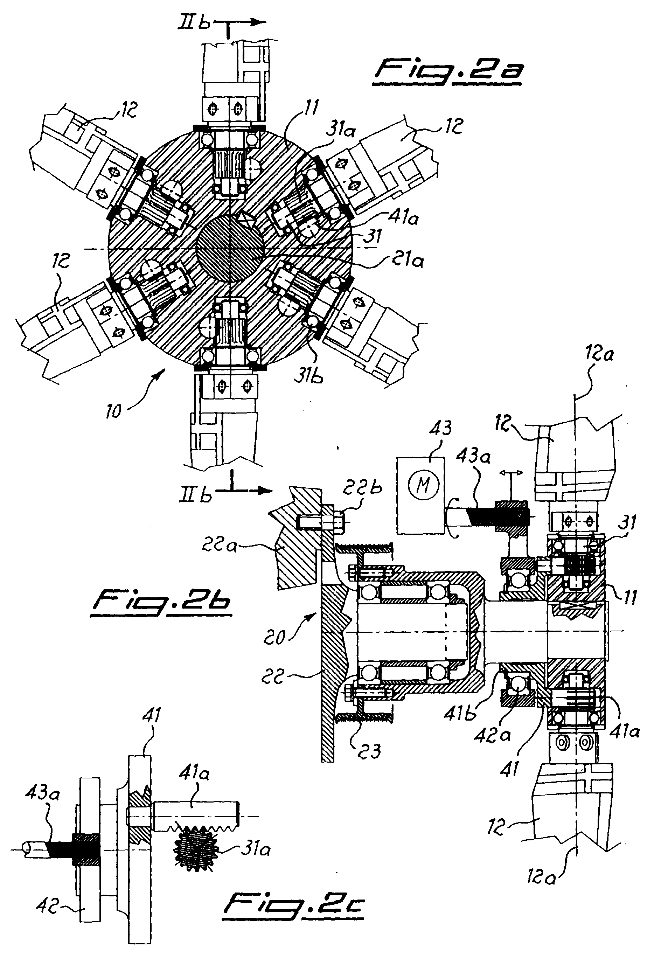

In this way it is possible, during rotation of the fan, to actuate, as required, the motor 43 which moves (in either direction) the disk 42 which, moving backwards towards the support 21 (Figs. 1b and 1c) or moving forwards towards the fan (Figs. 2b and 2c), causes respectively the backwards movement/forwards movement of the rack 41a and hence the rotation, in either direction, of the gearing 31a with consequent rotation of the blades 12 from a maximum flow position (Fig. 1b) to a minimum flow position (Fig. 2b).

As is obvious, the blade actuation device allows all the blades to be rotated simultaneously and in the same manner through a certain angle which is determined in each case according to needs.

The external motor may in fact be controlled in a known manner so as to obtain a substantially continuous variation in the angle of orientation of the blades.

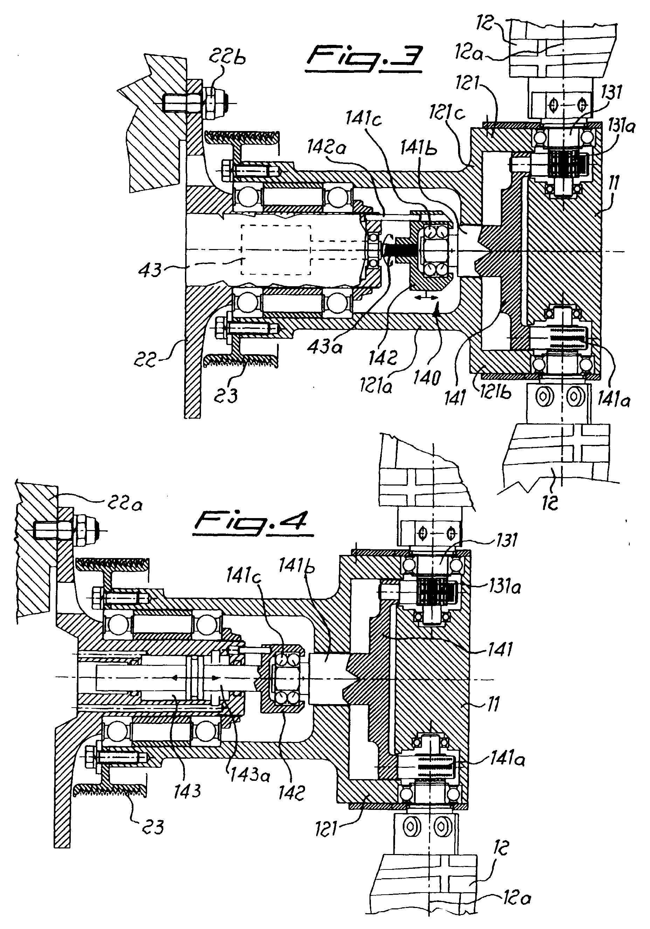

Fig. 3 shows a first variation of an example of embodiment of the device 140 for actuating rotation of the blades 12. In this configuration the motor 43 is arranged inside the support 121 of the fan.

Said support is in this case formed by two bell-shaped members 121a and 121b located opposite each other and separated by a partition 121c carrying the shank 141b of a disk 141 on which the racks 141a are mounted. In greater detail, said shank 141b extends on the opposite side to that of the racks 141a and is integral, by means of bearings 141c, with a further element 142 axially movable translationwise upon operation of a screw 43a which can be actuated by means of a motor 43, which are coaxially arranged inside the support 121.

Rotation of the element 142 is prevented by the longitudinal pin 142a.

Figure 4 shows a further embodiment of the apparatus according to the invention, in which the motor 43 is replaced by a double-acting cylinder 143 which is in turn arranged inside the support 121 and the rod 143a of which is connected to the element 142.

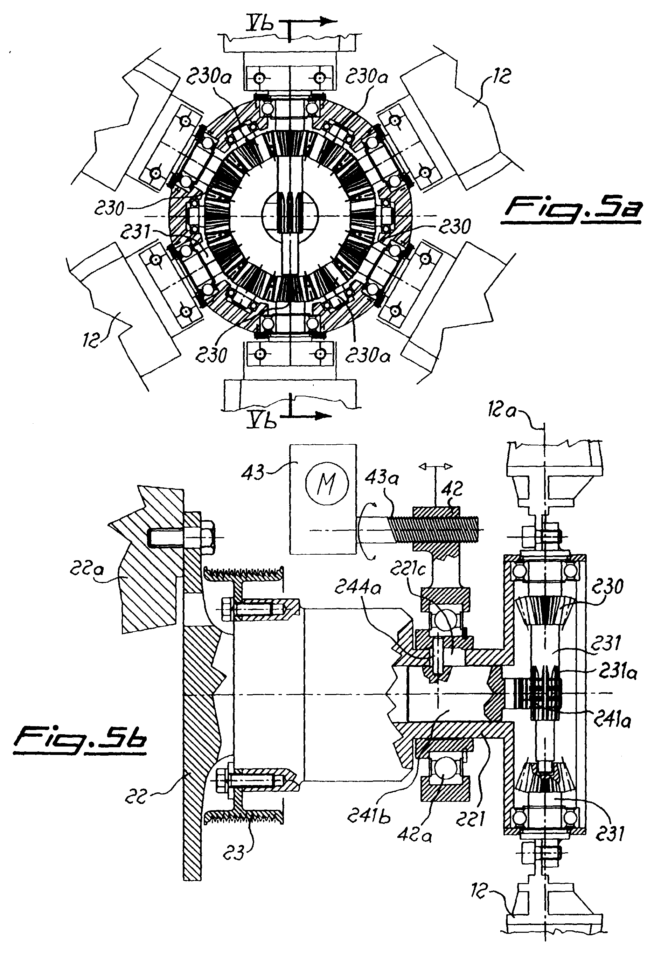

Figs. 5a and 5b show a further embodiment of the device for actuating rotation of the blades about their longitudinal axes.

In this configuration each pivot pin 231 of the blade 12 has a bevel gearing 230 and one of said pivot pins 231 extends longitudinally towards the centre of the fan where it has a cylindrical toothing 231a designed to co-operate with a rack 241a which has a shank 241b.

The shank 241b is radially connected, by means of a pin 244a which passes through the support 221, via an eyelet 221c, to a bush 244 which is in turn coupled by means of bearing 42a to a disk 42 which can be translated by means of the screw 43a and the motor 43 which are located outside the support 221.

In this way actuation of the motor 43 causes the forwards movement of the disk 42 and hence the pin 244a inside the associated eyelet 221c; the forwards movement of the pin 244a causes the consequent forwards movement of the shank 241b which moves, together with it, the central rack 241a which in turn actuates the gearing 231a, the pivot pin 231 and the bevel gearing 230.

As shown in Fig. 5a, the bevel gears 230 of the blades are engaged with bevel gears 230a which form a chain for transmission of the rotation to all the blades 12 with the same direction of rotation being maintained for all the blades themselves which are thus oriented simultaneously and in the same manner as required.

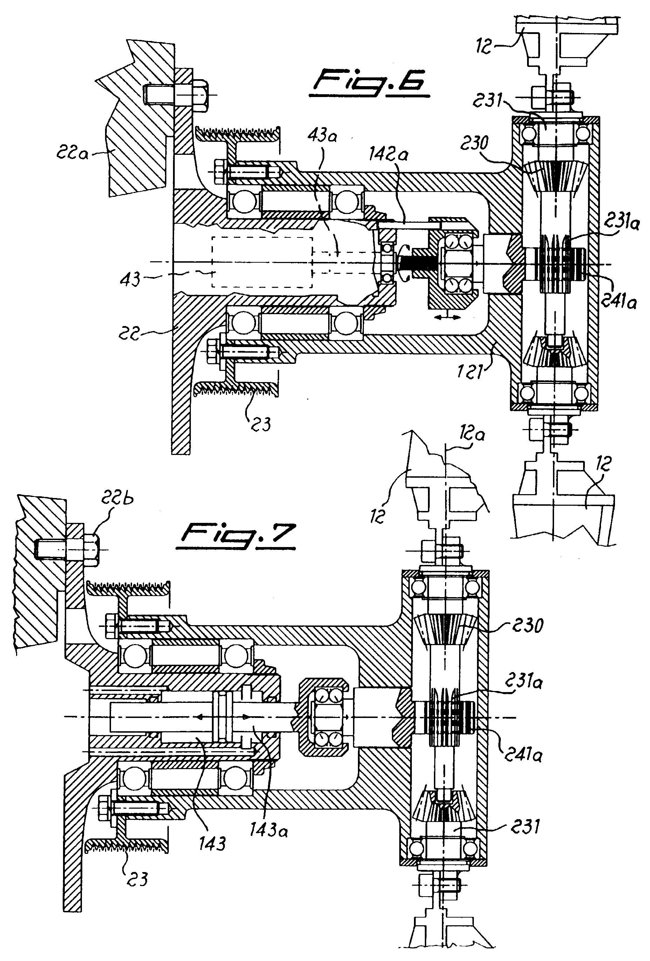

In this case also it is possible to envisage (Figs. 6 and 7) the arrangement of the drive system 43, 143 for actuation of the rack 241a in a position inside the support 121 of the fan. Since the design of the various parts is substantially the same as that already described in connection with Figs. 3 and 4, respectively, a further description of the corresponding Figs. 6 and 7 will not provided, since the correspondence with the said preceding figures may be easily verified.

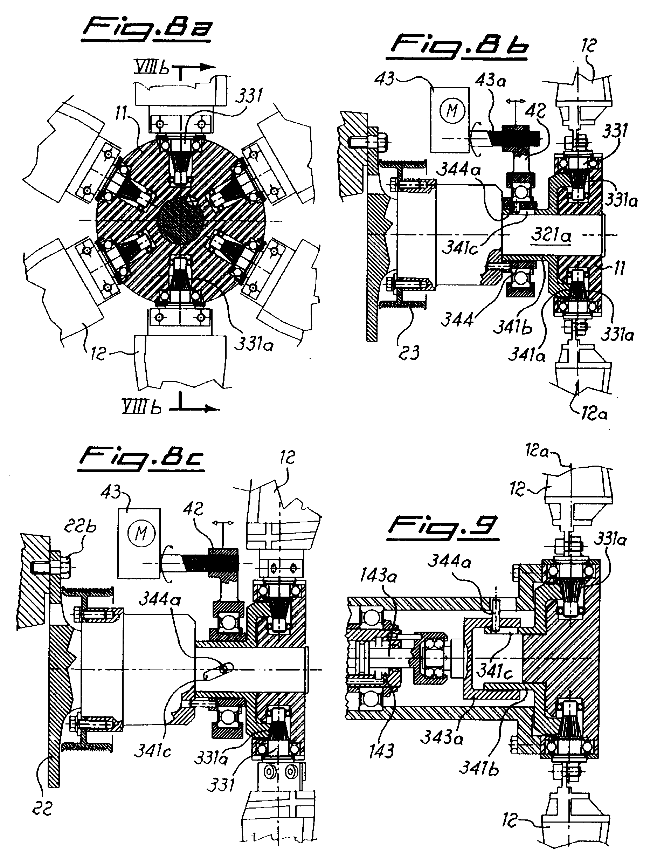

As illustrated in Figs. 8a to 8c, the fan according to the invention may have a device for actuating rotation of the blades, realized in accordance with a further variation.

In this configuration each blade 12 has a bevel gearing 331a on its pivot pin 331; each bevel gearing 331a meshes with a bevel wheel 341a which has a tube 341b extending on the opposite side to the toothing and mounted on the same shaft 321a supporting the fan 11.

Said tube 341b has, in a suitable position, an eyelet 341c with its axis inclined with respect to the axis of the shaft 321a.

The tube 341b is radially connected, by means of a pin 344a inserted inside the eyelet 341c, to a bush 344 which is in turn coupled, by means of a bearing 42a, to a disk 42 which can be translated by means of the screw 43a and the motor 43 which are located outside the support 321.

In this way, when the motor 43 actuates the screw 43a and causes the axial displacement of the disk 42 in either direction, this also produces the movement, along with it, of the bush 344 which is connected to the shaft 321a by means of the pin 344a and, as a result of the action of the latter on the inclined eyelet 341c, a corresponding rotation of the bevel wheel 341a which causes the rotation, simultaneously and in the same manner, of all the bevel gears 330 with consequent rotation of the blades 12.

Fig. 9 shows a drive device consisting of a double-acting cylinder 143 arranged inside the support 121 of the fan in a similar manner to that illustrated in Figs. 4 and 7.

The rod 143a of the cylinder actuates a cup-shaped member 343a which has a pin 344a radially projecting inwards and inserted into the eyelet 341c of the tube 341b. In this case also the forwards movement of the rod 143a causes rotation of the bevel wheel 341a.

In this version also, the drive system may consist of a motor 43 which is arranged inside the support 321 of the fan 10.

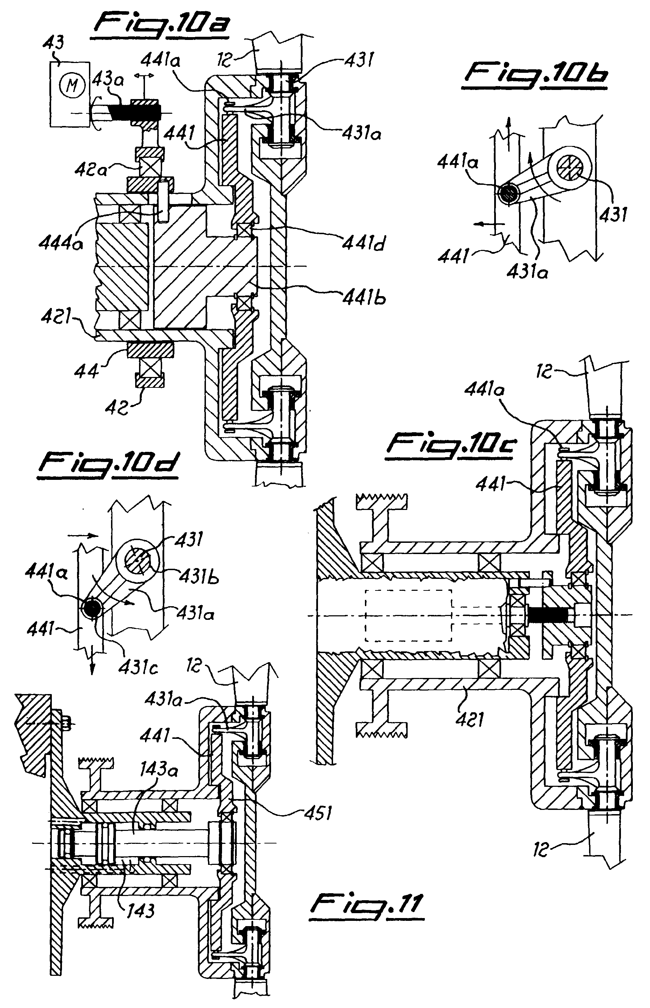

Fig. 10a shows a further variation of an example of the device for rotational actuation of the blades 12 which are mounted in the body 11 of the fan by means of a smooth pivot pin 431 which is axially keyed into a first hole 431b formed at a first end of an associated lever 431a, the other end of which has a second hole 431c which receives a pivot pin 441a radially integral with a plate 441 mounted, by means of a bearing 441d, on a support 441b which is radially connected, by means of a pin 444a, to bush 44 which is in turn coupled, by means of the bearing 42a, to the disk 42 which can be translated by means of the screw 43a and the motor 43 which are located outside the support 421 of the fan.

The forwards movement/backwards movement of the disk 42, upon operation of the motor 43, causes the forwards movement/backwards movement and simultaneous rotation of the plate 441 and the consequent rotation of the levers 431a which cause the simultaneous and uniform rotation of the blades 12.

For this embodiment also it is possible to envisage a drive device located inside the support 421 of the fan shown, by way of example in Fig. 11, as a cylinder 143, the rod 143a of which directly causes the translation - and therefore the rotation owing to the constraints imposed - of the plate 451.

In a manner similar to that of the preceding examples, the drive system for rotation, located inside the fan support, may consist of an electric motor or the like.

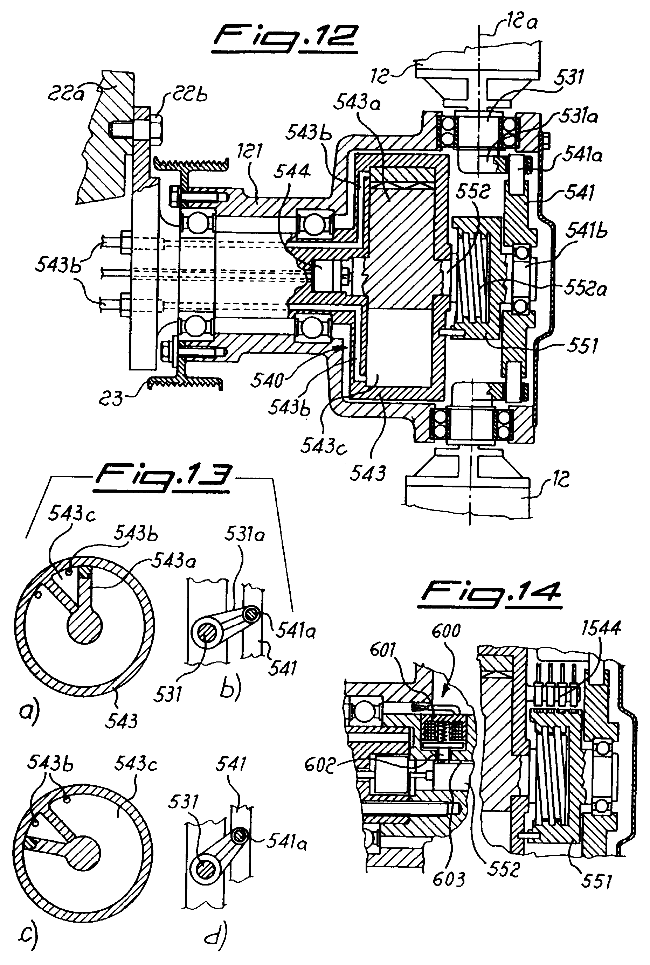

Figure 12 shows a further example of embodiment of the device for rotational actuation of the blades 12 about their longitudinal axis 12a.

In this configuration, each blade 12 is mounted in the body 11 of the fan by means of its pivot pin 531 joined to a first end of an L-shaped lever 531a, the other end of which is connected to a disk 541 by means of a radial pin 541a.

Said disk 541 is in turn coupled, by means of a bearing 541d, to an axial extension 541b designed for engagement with an actuating device 540.

Said axial extension 541b comprises a bell member 551 with an internal thread 551a designed to engage with a threading 552a of a shaft 552 which is in turn integral with a double-acting hydraulic actuator 543, the piston 543a of which may be rotationally actuated in either direction by means of suitable supplying/discharging of corresponding fluid recirculation ducts 543b respectively leading into the two chambers 543c of the cylinder 543.

As shown, the shaft 552 extends over a short distance outside the cylinder 543 on the opposite side to the fan so as to allow coupling to a device 544 for measuring the rotation performed by the piston 543a. This device may for example consist of an encoder which is conventional per se and therefore not described in detail.

The operating principle of the apparatus is as follows:
When manual operation or automatic control produces supplying/discharging of either of the two ducts 543b, the piston 543a rotates in one direction (Fig. 13a) or the other direction (Fig. 13c) causing rotation of the shaft 552 in either direction so that the threading 552a, acting on the internal thread 551a of the bell member 551, produces translation thereof in either direction, causing the forwards movement/backwards movement of the disk 541 which, acting by means of the levers 531a, on each pivot pin 531 of the blades 12, causes the controlled rotation of the latter about their longitudinal axes 12a in one direction (Fig. 13b) or in the other direction (Fig. 13d).

By means of the detection performed by the encoder 544 it is also possible to control continuously the rotation and therefore the position of the blades 12, causing an air flow corresponding to the actual cooling conditions which are required.

Fig. 14 shows solely the detail of a variation of embodiment of the devices for controlling rotation which in this case are formed by means of sensors 1544 which are arranged outside the bell member 551. With this configuration it is obviously possible to obtain stepwise control of the position and not continuous control as in the case above.

The same Fig. 14 also shows means 600 which are designed make rotation of the shaft 552 and hence the blades 12 irreversible.

Said means 600 consist of an electromagnet 601 acting on a pin 602 designed to engage with a corresponding seat 603 of the shaft 552, once controlled rotation of the latter has terminated.

Many variations may be introduced with regard to the practical realization of the various component parts, it being possible to envisage for example manual lever-type operating devices or electronic control and operating devices to obtain rotation of the blades at discrete or continuous angles in relation to the precise requirements for each specific application.

In addition, the irreversibility of rotation of the blades is ensured, said blades thus remaining in the position defined by the actuating and control devices.

It is also easy for the person skilled in the art to envisage detection means such as sensors and the like which can be associated with programming devices designed to automate adjustment of the angle of rotation of the blades.

On the other hand, in simplified embodiments, it is also possible to envisage using manual control means which are arranged, for example, inside the motor vehicle and can be easily operated by the driver.

## Claims

1. Apparatus with directable blades for conveying air to radiators of motor vehicles and the like, comprising a central body (11) mounted on a rotating support (21;121;221;321;421) and a plurality of blades (12) each radially mounted with its own engaging element (31;131;231;331;431) on said central body (11), characterized in that each of said blades (12) are rotatable about their own longitudinal axes by drive means (42,43,43a;142,143,143a) and transmission means (41a,31a; 141a,31a; 241a,231a,230; 341a,330; 441a,431a) for the movement depending on the quantity of air required for correct operation of the engine.

2. Apparatus according to Claim 1, characterized in that said engaging element of the blades (12) consists of a pivot pin (31;231;331;431;531) provided with the element for coupling with the said transmission means.

3. Apparatus according to Claim 2, characterized in that said coupling element is a cylindrical gearing (31a; 231a).

4. Apparatus according to Claim 3, characterized in that said cylindrical gearing (31a) is arranged on each pivot pin (31) of each blade (12).

5. Apparatus according to Claim 4, characterized in that each gearing (31a) co-operates with a respective linear gearing (41a;141a) integral with a transmission element (41;141) which is movable translationwise in an axial direction.

6. Apparatus according to Claim 5, characterized in that said transmission means (41;141) has an axial extension (41b;141b) suitable for coupling with said actuation means (43;143) for translation thereof.

7. Apparatus according to Claim 3, characterized in that said cylindrical gearing (231a) is arranged on a single pivot pin (231) of a single blade (12).

8. Apparatus according to Claim 7, characterized in that each pivot pin (231) has a bevel gearing (230).

9. Apparatus according to Claim 8, characterized in that the cylindrical gearing (231a) co-operates with a single linear gearing (241a) integral with a transmission element (241b) movable translationwise in an axial direction and suitable for coupling with said means (43;143) for actuation thereof.

10. Apparatus according to Claim 8, characterized in that further bevel gearings (230a) for transmission of the rotational movement of the blades (12) are radially mounted on the body (11) thereof.

11. Apparatus according to Claim 2, characterized in that said element for coupling with the transmission means is a bevel gearing (331a).

12. Apparatus according to Claim 11, characterized in that said transmission element consists of a bevel wheel (341a) provided with an axial extension (341b) for coupling with associated means (344,341d,344a;343a) for rotational actuation of the bevel wheel itself.

13. Apparatus according to Claim 1, characterized in that said element for coupling with the transmission means consists of a lever (431a;531a), the opposite ends of which are respectively pivotably mounted on the pivot pin (431;531) of the blade and on the element (441;541) for transmission of the movement.

14. Apparatus according to Claim 13, characterized in that said transmission element (441;541) is movable both rotatably and translatably upon operation of associated actuation means.

15. Apparatus according to Claim 14, characterized in that said element for transmission of the movement consists of a disk (441;541) having an axial extension (441b;541b) suitable for coupling with the said actuation drive devices (43;143;543).

16. Apparatus according to Claim 1, characterized in that said transmission drive means are located outside the support element (21;121;221;321;421) of the apparatus.

17. Apparatus according to Claim 1, characterized in that said transmission drive means are located inside the support element (21;121;221;321;421) of the apparatus.

18. Apparatus according to Claim 16, characterized in that said drive means comprise at least one disk (42) which is coaxially mounted rotatably idle on the support of the apparatus and movable translationwise in an axial direction with respect to the support itself.

19. Apparatus according to Claim 1, characterized in that said drive means consist of a motor (43) actuating a screw (43a).

20. Apparatus according to Claim 17, characterized in that said drive means consist of a double-acting cylinder (143;543).

21. Apparatus according to Claim 20, characterized in that said drive means consist of a double-acting cylinder (543) with piston (543a) rotating about an associated axis of rotation.

22. Apparatus according to Claim 21, characterized in that said axis of rotation consists of a shaft (552) provided with a threading (552a) designed to engage with the internal thread (551a) of a bell member (551) coaxial with the said shaft and associated with the said disk (541) for rotation of the blades (12).

23. Apparatus according to Claim 22, characterized in that a bearing (541d) supporting a disk (541) connected to the pivot pins (531) of the blades (12) is mounted on one end of said shaft (552).

24. Apparatus according to Claim 23, characterized in that said connection between disk (541) and pivot pin (531) of the blades (12) is obtained by means of a lever (531a).

25. Apparatus according to Claim 22, characterized in that devices (544;1544) for detecting the angular position of the shaft itself and/or the bell member (551) are associated with the shaft (552).

26. Apparatus according to Claim 17, characterized in that it comprises means (600) able to ensure the irreversibility of rotation of the blades (12).

27. Apparatus according to Claim 26, characterized in that said irreversibility means (600) consist of a pivot pin (602) designed to engage with corresponding seats (603) of the shaft (552) for effecting rotation of the blades (12).

28. Apparatus according to Claim 26, characterized in that said pivot pin is movable upon operation of associated actuating means (601) such as an electromagnet or the like.
